Europäisches Patentamt

European Patent Office

Office européen des brevets

(19)

(11) Veröffentlichungsnummer : **0 023 967**
**B1**

# EUROPÄISCHE PATENTSCHRIFT

(12)

(45) Veröffentlichungstag der Patentschrift :
08.02.84

(51) Int. Cl.³ : **B 60 G 15/06**

(21) Anmeldenummer : **80103754.0**

(22) Anmeldetag : **02.07.80**

(54) **Anordnung zur Befestigung eines hydraulischen Schwingungsdämpfers oder dergleichen im Tragrohr eines radführenden Federbeins.**

(30) Priorität : **10.08.79 DE 2932515**

(43) Veröffentlichungstag der Anmeldung :
**18.02.81 Patentblatt 81/07**

(45) Bekanntmachung des Hinweises auf die Patenterteilung : **08.02.84 Patentblatt 84/06**

(84) Benannte Vertragsstaaten :
**FR GB IT**

(56) Entgegenhaltungen :
**DE-A- 1 575 184**
**DE-B- 2 404 188**
**DE-U- 7 324 332**
**DE-U-66 045 12**
**GB-A- 1 296 722**
**US-A- 3 811 664**

(73) Patentinhaber : **Boge GmbH**
**Bogestrasse 50**
**D-5208 Eitorf/Sieg (DE)**

(72) Erfinder : **Schmidt, Rudolf**
**Ulmenweg 9**
**D-5208 Eitorf/Sieg (DE)** .

**Anordnung zur Befestigung eines hydraulischen Schwingungsdämpfers oder dergleichen im Tragrohr eines radführenden Federbeins**

Die Erfindung bezieht sich auf eine Anordnung zur Befestigung eines hydraulischen Schwingungsdämpfers oder dergleichen im Tragrohr eines radführenden Federbeins, insbesondere für Kraftfahrzeuge, mit im Bereich des oberen Endabschnitts des Schwingungsdämpfers zwischen diesem und dem Tragrohr vorgesehenen oberen Befestigungseinrichtungen, wobei ein zwsichen dem Schwingungsdämpfer und dem Tragrohr angeordneter Schraubring vorgesehen ist, wobei die oberen Befestigungseinrichtungen im Bereich des unteren Kragens des am Tragrohr befestigten Federtellers angeordnet sind und im Bereich des Bodens des Schwingungsdämpfers zwischen diesem und dem Tragrohr untere Befestigungseinrichtungen vorgesehen sind.

Derartige hydraulische Schwingungsdämpfer werden bekanntlich von oben in ein Federbeintragrohr eingebaut und können aus diesem auch von oben wieder ausgebaut werden. Während das Tragrohr mit seinem unteren Ende über entsprechende Verbindungselemente mit dem Fahrwerk verbunden ist, ist das obere Kolbenstangenende des Schwingungsdämpfers über ein Lager mit dem Fahrzeugaufbau verbunden. Zwischen einem Federteller am Tragrohr und einem weiteren Federteller am Lager des Fahrzeugaufbaus ist eine Fahrzeugtragfeder angeordnet. Eine derartige lösbare Befestigung eines Radachsschenkels an einer diesen tragenden Teleskopstrebe ist z. B. aus der DE-AS 24 04 188 bekannt, bei der die Teleskopstrebe mit ihrem freien Ende in ein becherförmiges Teil eingesetzt und mit einem Gewindezapfen versehen ist, der duch den Boden des becherförmigen Teiles ragt und unter Verwendung einer Mutter der Befestigung der Teleskopstrebe im becherförmigen Teil dient.

Bei einer weiteren bekannten Anordnung (z. B. DE-GM 66 04 512) stützt sich der in üblicher Weise ausgebildete Schwingungsdämpfer mit dem Boden seines Außenrohres gegen den Boden des Tragrohres ab und ist mit dem oberen Ende des Außenrohres über einen Schraubring mit dem Tragrohr axial unter Druckspannung verbunden. Wenn nun aus Gründen der Gewichtseinsparung das Tragrohr bis zum unteren Kragen des mit ihm verbundenen Federtellers verkürzt werden muß, entstehen Schwierigkeiten bei der Anbringung des Schraubringes.

Der vorliegenden Erfindung liegt die Aufgabe zugrunde, eine einfache und wirksame Anordnung zur Befestigung des Schwingungsdämpfers in einem Tragrohr zu schaffen, welches insbesondere bis zum unteren Kragen des mit ihm verbundenen Federtellers verkürzt ist. Dabei soll die Befestigungsanordnung vor allem räumlich leicht unterbringbar und derart betätigbar sein, daß der Einbauzustand, in dem sich die Innenteile beispielsweise eines Zweirohrschwingungsdämpfers aus Funktionsgründen befinden, nicht beeinträchtigt wird.

Diese Aufgabe wird bei einer Befestigungsanordnung der eingangs beschriebenen Gattung erfindungsgemäß dadurch gelöst, daß der von den oberen Befestigungseinrichtungen umfaßte Schraubring am Außenrohr des Schwingungsdämpfers fest angebracht ist und die unteren Befestigungseinrichtungen durch Abstützen des Bodens des Schwingungsdämpfers am Boden des Tragrohres gebildet sind, wobei am Boden des Schwingungsdämpfers ein Sechskant oder dergleichen fest angebracht ist, welcher durch einen entsprechenden Durchbruch des Bodens des Tragrohres aus diesem herausragt, wobei die oberen und unteren Befestigungseinrichtungen ohne Aufbringung einer axialen Zugbeanspruchung auf das Außenrohr des Schwingungsdämpfers betätigbar sind.

Es sind also obere und untere Befestigungseinrichtungen zwischen Schwingungsdämpfer und Tragrohr vorgesehen, so daß bei verkürztem Federbeintragrohr keinerlei rämliche und funktionelle Probleme für die Befestigungsanordnung entsteht. Dadurch daß ferner die oberen und unteren Befestigungseinrichtungen ohne Aufbringung einer axialen Zugbeanspruchung auf das Außenrohr betätigbar sind, ist gewährleistet, daß die axiale Druckspannung, unter der die Innenteile beispielsweise eines Zweirohrschwingungsdämpfers aus Funktionsgründen stehen, nicht durch Vergrößerung der Zugspannung des Außenrohres des Schwingungsdämpfers verloren geht.

Dabei ist mit Vorteil in dem Schraubring ein Gummiring oder dergleichen eingelagert, der sich gegen den unteren Kragen des Federtellers abstützt.

Bei dieser Ausführungsform wird also der mit dem Schraubring versehene Schwingungsdämpfer auf besonders einfache Weise mittels eines auf dem Sechskant aufgesteckten Schlüssels in das Tragrohr eingedreht bzw. aus diesem herausgedreht. Dabei wird das Außenrohr des Schwingungsdämpfers unter Vermeidung einer axialen Zugbeanspruchung axial verspannt, d. h. unter Druck in axialer Richtung eingespannt. Der in den Schraubring eingelegte Gummiring dient zur Vermeidung von Korrosionsschäden.

Alternativ wird diese Aufgabe dadurch gelöst, daß im Bereich des oberen Endabschnittes des Schwingungsdämpfers zwischen diesem und dem Tragrohr eine obere Befestigungseinrichtung vorgesehen ist, wobei die oberen Befestigungseinrichtungen im Bereich des unteren Kragens des am Tragrohr befestigten Federtellers angeordnet sind und daß zwischen dem Schwingungsdämpfer und dem Tragrohr ein Schraubring angeordnet ist, daß der ringförmige Vorsprung des Schwingungsdämpfers an einem sich an das Außenrohr anschließenden Bodentopf angebracht ist und daß der ringförmige Vorsprung am Schwingungsdämpfer durch einen Sprengring und der Vorsprung innerhalb des Tragrohrs durch in diesem ausgeprägte Innensicken gebildet sind.

Im übrigen ist mit Vorteil am Boden des Schwingungsdämpfers ein Sechskant oder dergleichen fest angebracht. Bei dieser Ausführungsform erfolgt die untere Befestigung des Schwingungsdämpfers im Tragrohr auf einfache Weise dadurch, daß man den Schraubring mittels eines entsprechenden in die Betätigungsnuten im Bund des Schraubrings eingesteckten Schlüssels eindreht, wobei der Schwingungsdämpfer über den an seinem Boden befestigten Sechskant entgegengehalten wird. Dabei wird der umlaufende Vorsprung des Schwingungsdämpfers gegen den ihm zugeordneten Innenvorsprung des Tragrohrs angedrückt. Der Schwingungsdämpfer wird somit durch die unteren Befestigungseinrichtungen einfach und sicher im Tragrohr axial fixiert.

Hinsichtlich der oberen Befestigungseinrichtungen sind bei der vorstehend beschriebenen Ausführungsform verschiedene erfindungsgemäße Ausbildungen denkbar. Beispielsweise können die oberen Befestigungseinrichtungen eine Klemmschraub-Anordnung zum radialen Verklemmen des Außenrohrs im Tragrohr umfassen. Mit Vorteil ist dabei stirnseitig am Tragrohr zwischen Außenrohr und unterem Kragen des Federtellers ein Gummipuffer angeordnet, welcher sich mit seinem oberen Ende stirnseitig gegen eine mit dem Außenrohr fest verbundene Scheibe abstützt.

Durch Betätigung der diese oberen Befestigungseinrichtungen bildenden Klemmschraube wird das Außenrohr des Schwingungsdämpfers innerhalb des Tragrohres derart verspannt, daß Kontaktschlüssigkeit zwischen Außenrohr und Tragrohr entsteht. Hierdurch wird auf einfache Weise eine radiale Beweglichkeit des Schwingungsdämpfers in seinem oberen Bereich innerhalb des Tragrohrs vermieden. Der an den oberen Befestigungseinrichtungen vorgesehene Gummipuffer dient im übrigen zur Vermeidung von Korrosionsschäden.

Gemäß einer anderen ebenfalls vorteilhaften Ausbildung der oberen Befestigungseinrichtungen umfassen diese einen zwischen Außenrohr und Tragrohr einbringbaren geschlitzten, innenspannenden Ring mit selbsthemmenden Außenkonus, welchem ein entsprechender Innenkonus des Tragrohrs zugeordnet ist, wobei sich der Ring nach oben unter Zwischenschaltung einer axial beweglichen Scheibe gegen eine vorgespannte Schraubenfeder abstützt, die sich mit ihrem oberen Ende gegen eine mit dem Außenrohr fest verbundene Scheibe abstützt. Zwischen dem innenspannenden Ring und der axial beweglichen Scheibe ist mit Vorteil ein sich radial zwischen Außenrohr und Tragrohr erstreckender Gummiring oder dergleichen angeordnet.

Auch bei dieser Ausbildung der oberen Befestigungseinrichtungen wird auf einfache Weise eine radiale Beweglichkeit des Schwingungsdämpfers in seinem oberen Bereich innerhalb des Tragrohrs vermieden. Um eine während des Anschraubvorgangs erforderliche axiale Beweglichkeit des Schwingungsdämpfers zu gewährleisten, muß die erzeugte Axialkraft der Schraubenfeder unterhalb der axialen Klemmkraft des innenspannenden Ringes liegen. Im übrigen stellt die selbsthemmende Funktionsweise des Konus sicher, daß der unter Radialpressung stehende Kontakt zwischen Außenrohr des Schwingungsdämpfers, innen-spannendem Ring und Tragrohr bei Seitenkräften keine Axialverschiebung des innenspannenden Ringes zuläßt. Der auch bei diesen oberen Befestigungseinrichtungen vorgesehene Gummiring dient in entsprechender Weise zum Korrosionsschutz.

Sollte der innen-spannende Ring bei der Demontage der Schwingungsdämpferanordnung im Innenkonus des Tragrohrs haften bleiben, so kann der Ring durch den über das Außenrohr des Schwingungsdämpfers herausragenden Vorsprung, insbesondere Sprengring bzw. Außenflansch mitgenommen werden. Erfindungsgemäß können zu diesem Zweck auch unterhalb des innen-spannenden Ringes am Außenrohr angeordnete Außensicken vorgesehen sein.

Die vorstehend beschriebene Schwingungsdämpfer-Befestigungsanordnung mit innenspannendem Ring ist mit besonderem Vorteil auch dann verwendbar, wenn das Tragrohr aus einer gewichtseinsparenden Aluminiumlegierung besteht. Die größere Wärmeausdehnung eines solchen Tragrohres gegenüber dem aus Stahl bestehenden Schwingungsdämpfer in axialer und auch in radialer Richtung wird durch den nachstellenden innen-spannenden Ring kompensiert. Die formschlüssige Verbindung bleibt somit unter allen Temperaturbedingungen bestehen.

Wie leicht einzusehen, sind auch die beiden zuletzt beschriebenen Ausführungsformen der oberen und unteren Befestigungseinrichtungen ohne Aufbringung einer axialen Zugbeanspruchung auf das Außenrohr betätigbar.

Die Erfindung wird nachstehend anhand von in der Zeichnung schematisch dargestellten Ausführungsbeispielen näher erläutert. Es zeigen :

Figur 1 im Längsschnitt ein Federbein-Tragrohr mit eingelagertem Schwingungsdämpfer, welcher mittels einer ersten Ausführungsform der Befestigungsanordnung gemäß der Erfindung im Tragrohr befestigt ist,

Figur 2 eine der Figur 1 entsprechende Darstellung mit einer zweiten Ausführungsform der erfindungsgemäßen Befestigungsanordnung und

Figur 3 eine der Figur 1 entsprechende Darstellung mit einer dritten Ausführungsform der Befestigungsanordnung nach der Erfindung.

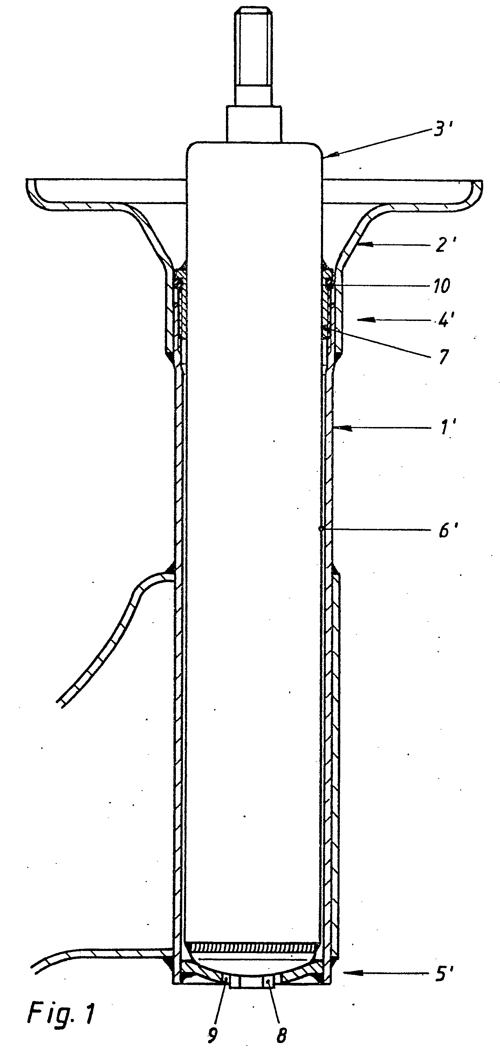

In den Figuren 1 bis 3 ist mit 1' bzw. 1'' bzw. 1''' ein Tragrohr eines Kraftfahrzeug-Federbeins bezeichnet, welches bis zum unteren Kragen des mit ihm verbundenen Federtellers 2' bzw. 2'' bzw. 2''' verkürzt ist. Im Tragrohr 1' bzw. 1'' bzw. 1''' ist ein hydraulischer Schwingungsdämpfer 3' bzw. 3'' bzw. 3'''

eingelagert. Zur Befestigung des Schwingungsdämpfers 3' bzw. 3'' bzw. 3''' dient jeweils eine Befestigungsanordnung, wobei die in den Figuren 1 bis 3 dargestellten Befestigungsanordnungen jeweils durch obere 4' bzw. 4'' bzw. 4''' und untere 5' bzw. 5'' bzw. 5''' Befestigungseinrichtungen gebildet sind. Dabei sind erfindungsgemäß die oberen Befestigungseinrichtungen 4' bzw. 4'' bzw. 4''' im Bereich des unteren Kragens des am Tragrohr 1 befestigten Federtellers 2', 2'', 2''' angeordnet, und die unteren Befestigungseinrichtungen 5' bzw. 5'' bzw. 5''' sind im Bereich des Bodens des Schwingungsdämpfers vorgesehen, wobei die oberen und unteren Befestigungseinrichtungen jeweils ohne Aufbringung einer axialen Zugbeanspruchung auf das Außenrohr 6' bzw. 6'' bzw. 6''' des Schwingungsdämpfers 3' bzw. 3'' bzw. 3''' betätigbar sind.

Bei der Ausführung nach Figur 1 umfassen die oberen Befestigungseinrichtungen einen Schraubring 7, welcher am Außenrohr 6' des Schwingungsdämpfers 3' durch Verschweißen fest angebracht ist. Das Tragrohr 1' weist in seinem oberen Endbereich ein nicht näher bezeichnetes Gewinde zur Aufnahme des Schraubrings 7 auf. Die unteren Befestigungseinrichtungen 5' sind durch Abstützen des Bodens des Schwingungsdämpfers 3' am Boden des Tragrohrs 1' gebildet, wobei am Boden des Schwingungsdämpfers 3' ein Sechskant 8 fest angebracht ist, welcher durch einen entsprechenden Durchbruch 9 des Bodens des Tragrohrs 1' aus diesem herausragt. Zur Betätigung der Befestigungsanordnung gemäß Figur 1 wird einfach der Sechskant 8 mittels eines Schlüssels gedreht, wodurch der am Schwingungsdämpfer 3' befestigte Schraubring 7 in das Gewinde des Tragrohrs 1' eingeschraubt wird. Zur Vermeidung von Korrosionsschäden ist im Schraubring 7 ein Gummiring 10 eingelagert, der sich gegen den unteren Kragen des Federtellers 2' abstützt.

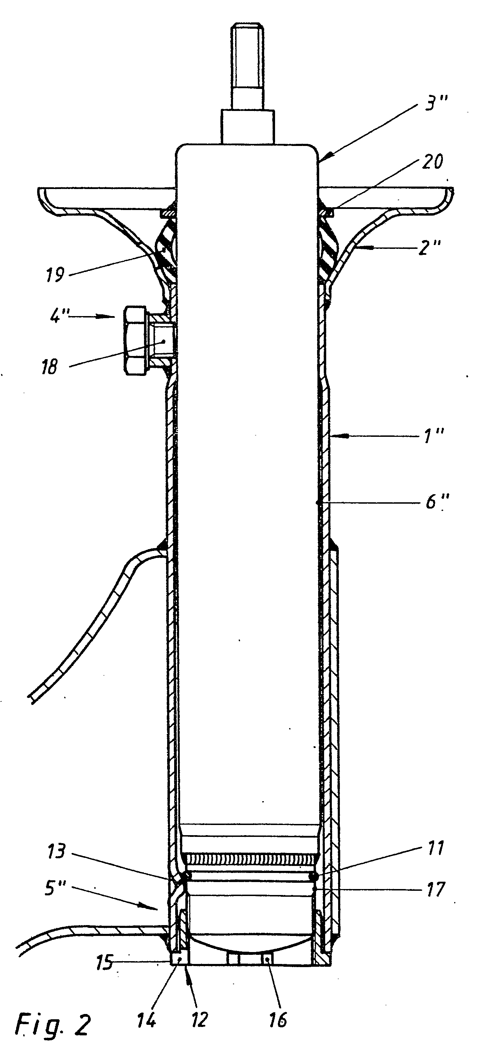

Bei der Ausführung nach Figur 2 umfassen die unteren Befestigungseinrichtungen 5'' einen insbesondere als Sprengring ausgebildeten ringförmigen Vorsprung 11 im Bereich des Endes des Schwingungsdämpfers 3''. Der Vorsprung 11 ist mittels eines zwischen den unteren Enden von Schwingungsdämpfer 3'' und unten offenem Tragrohr 1'' angeordneten Schraubrings 12 gegen einen insbesondere als mehrere Innensicken ausgebildeten Vorsprung 13 innerhalb des Tragrohrs 1'' abstützbar.

Der Schraubring 12 ist mit seinem Gewinde in ein am Ende des Schwingungsdämpfers 3'' befindliches nicht näher bezeichnetes Gewinde einschraubbar und stützt sich mit einem äußeren, Betätigungsnuten 14 aufweisenden Bund 15 stirnseitig am Tragrohr 1'' ab. Mittels eines in den Betätigungsnuten 14 einsteckbaren Schlüssels ist der Schraubring 12 einschraubbar, wobei der Vorsprung 11 am Schwingungsdämpfer 3'' gegen den Vorsprung 13 am Tragrohr 1'' andrückbar ist. Hierbei wird der Schwingungsdämpfer 3'' über einen an seinem Boden befestigten Sechskant 16 entgegengehalten.

Zweckmäßigerweise ist der ringförmige Vorsprung 11 des Schwingungsdämpfers an einem sich an das eigentliche Außenrohr 6'' anschließenden Bodentopf 17 angebracht.

Die in Figur 2 dargestellten oberen Befestigungseinrichtungen 4'' umfassen eine Klemmschraub-Anordnung 18 zum radialen Verklemmen des Außenrohrs 6'' im Tragrohr 1''. Ferner ist stirnseitig am Tragrohr 1'' zwischen Außenrohr 6'' und unterem Kragen des Federtellers 2'' ein Gummipuffer 19 angeordnet, welcher sich mit seinem oberen Ende stirnseitig gegen eine mit dem Außenrohr 6'' fest verbundene Scheibe 20 abstützt. Der Gummipuffer 19 dient zur Vermeidung von Korrosionsschäden.

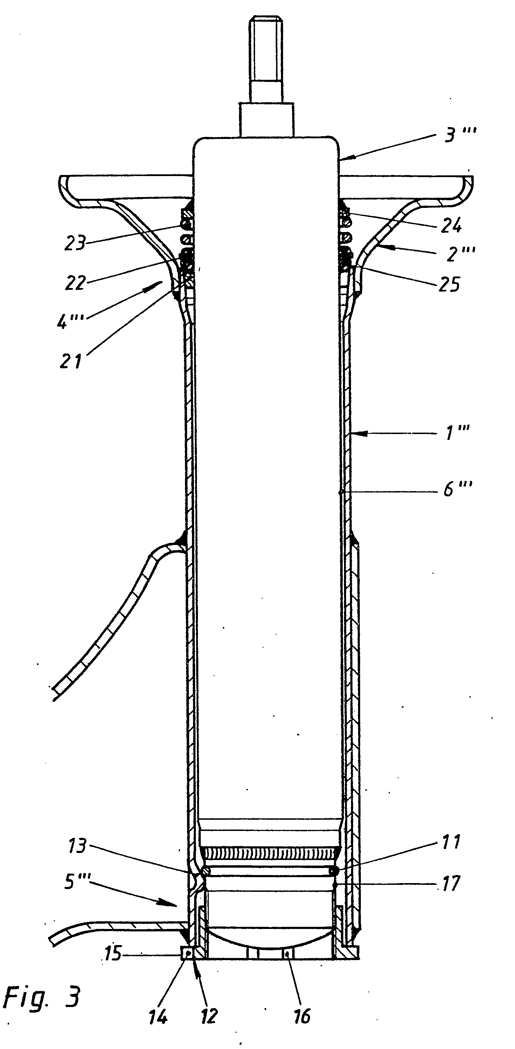

Bei der in Figur 3 veranschaulichten Befestigungsanordnung entsprechen die unteren Befestigungseinrichtungen 5''' den unteren Befestigungseinrichtungen 5'' nach Figur 2. Hingegen sind die oberen Befestigungseinrichtungen 4''' unterschiedlich ausgebildet.

Im einzelnen umfassen die oberen Befestigungseinrichtungen 4''' einen zwischen Außenrohr 6''' und Tragrohr 1''' einbringbaren geschlitzten, innen-spannenden Ring 21 mit selbsthemmendem Außenkonus, welchem ein entsprechender Innenkonus des Tragrohrs 1''' zugeordnet ist. Der Ring 21 stützt sich nach oben unter Zwischenschaltung einer axial beweglichen Scheibe 22 gegen eine vorgespannte Schraubenfeder 23 ab, die sich mit ihrem oberen Ende gegen eine mit dem Außenrohr fest verbundene Scheibe 24 abstützt.

Es versteht sich, daß die erzeugte Axialkraft der Schraubenfeder 23 unterhalb der axialen Klemmkraft des innen-spannenden Ringes 21 liegt, um die axiale Beweglichkeit des Schwingungsdämpfers 3''' während des Anschraubvorganges mittels des Schraubrings 12 zu gewährleisten. Die selbsthemmende Funktionsweise des innen-spannenden Rings 21 ist erforderlich, damit der unter Radialpressung stehende Kontakt zwischen Außenrohr 6''', innen-spannendem Ring 21 und Tragrohr 1''' bei Seitenkräften keine Axialverschiebung des innen-spannenden Ringes 21 zuläßt.

Sollte der innen-spannende Ring 21 beim Ausbau des Schwingungsdämpfers 3''' aus dem Tragrohr 1''' in dessen Innenkonus haften bleiben, so wird der Ring 21 durch am Außenrohr 6''' unterhalb des Ringes 21 befindliche (nicht dargestellte) Außensicken mitgenommen.

Zwischen dem innen-spannenden Ring 21 und der axial beweglichen Scheibe 22 ist ein sich radial zwischen Außenrohr 6''' und Tragrohr 1''' erstreckender Gummiring 25 angeordnet. Der Gummiring 25 dient zur Vermeidung von Korrosionsschäden.

Bei der in Figur 3 dargestellten Ausführungsform kann mit Vorteil das Tragrohr 1''' aus einer gewichtseinsparenden Aluminium-Legierung bestehen, da die größere Wärmeausdehnung eines solchen Tragrohres gegenüber dem aus Stahl bestehenden Schwingungsdämpfer 3''' in axialer und auch radialer Richtung durch den nachstellenden innen-spannenden Ring 21 kompensiert wird. Die formschlüssige Verbindung durch die oberen Befestigungseinrichtungen 4''' bleibt somit unter allen Temperaturbedingungen bestehen.

Wie ersichtlich, sind sämtliche in den Figuren 1 bis 3 dargestellte Ausführungsformen der oberen 4' bzw. 4'' bzw. 4''' und unteren 5' bzw. 5'' bzw. 5''' Befestigungseinrichtungen ohne Aufbringung einer axialen Zugbeanspruchung auf das Außenrohr 6' bzw. 6''' betätigbar. In diesem Zusammenhang ist ferner hervorzuheben, daß die erfindungsgemäßen Befestigungsanordnungen nach den Figuren 1 bis 3 derart angeordnet und lösbar ausgebildet sind, daß sie auf einfache Weise ein Wiederausbauen des Schwingungsdämpfers aus dem Federbein-Tragrohr ermöglichen.

## Ansprüche

1. Anordnung zur Befestigung eines hydraulischen Schwingungsdämpfers oder dergleichen im Tragrohr (1') eines radführenden Federbeines, insbesondere für Kraftfahrzeuge, mit im Bereich des oberen Endabschnitts des Schwingungsdämpfers (3') zwischen diesem und dem Tragrohr (1') vorgesehenen oberen Befestigungseinrichtung (4'), wobei ein zwischen dem Schwingungsdämpfer (3') und dem Tragrohr (1') angeordneter Schraubring vorgesehen ist, wobei die oberen Befestigungseinrichtungen (4') im Bereich des unteren Kragens des am Tragrohr (1') befestigten Federtellers (2') angeordnet sind und im Bereich des Bodens des Schwingungsdämpfers (3') zwischen diesem und dem Tragrohr (1') untere Befestigungseinrichtungen vorgesehen sind, dadurch gekennzeichnet, daß der von den oberen Befestigungseinrichtungen (4') umfaßte Schraubring (7) am Außenrohr (6') des Schwingungsdämpfers (3') fest angebracht ist und die unteren Befestigungseinrichtungen (5') durch Abstützen des Bodens des Schwingungsdämpfers (3') am Boden des Tragrohres (1') gebildet sind, wobei am Boden des Schwingungsdämpfers (3') ein Sechskant (8) oder dergleichen fest angebracht ist, welcher durch einen entsprechenden Durchbruch (9) des Bodens des Tragrohres (1') aus diesem herausragt, wobei die oberen (4') und unteren Befestigungseinrichtungen (5') ohne Aufbringung einer axialen Zugbeanspruchung auf das Außenrohr (6') des Schwingungsdämpfers betätigbar sind.

2. Anordnung nach Anspruch 1, dadurch gekennzeichnet, daß in dem Schraubring (7) ein Gummiring (10) oder dergleichen eingelagert ist, der sich gegen den unteren Kragen des Federtellers (2') abstützt.

3. Anordnung zur Befestigung eines hydraulischen Schwingungsdämpfers oder dergleichen im Tragrohr (1'', 1''') eines radführenden Federbeines, insbesondere für Kraftfahrzeuge, wobei das nach unten offene Tragrohr (1'', 1''') eine obere und untere Befestigung für den Schwingungsdämpfer (3'', 3''') aufweist und die untere Befestigungseinrichtung (5'', 5''') einen ringförmigen Vorsprung (11) aufweist, auf dem sich ein ringförmiger Vorsprung im Bereich des Endes des Schwingungsdämpfers (3'', 3''') abstützt, und das Ende des Schwingungsdämpfers (3'', 3''') einen mit Außengewinde versehenen Ansatz aufweist, der sich mit einer zusammenarbeitenden Mutter gegen das untere Ende des Tragrohres (1'', 1''') abstützt, dadurch gekennzeichnet, daß im Bereich des oberen Endabschnittes des Schwingungsdämpfers (3', 3''') zwischen diesem und dem Tragrohr (1'', 1''') eine obere Befestigungseinrichtung (4'', 4''') vorgesehen ist, wobei die oberen Befestigungseinrichtungen (4'', 4''') im Bereich des unteren Kragens des am Tragrohr (1'', 1''') befestigten Federtellers (2'', 2''') angeordnet sind und daß zwischen dem Schwingungsdämpfer (3'', 3''') und dem Tragrohr (1'', 1''') ein Schraubring (12) angeordnet ist, und daß der ringförmige Vorsprung (11) des Schwingungsdämpfers (3'', 3''') an einem sich an das Außenrohr (6'', 6''') anschließenden Bodentopf (17) angebracht ist und der ringförmige Vorsprung (11) am Schwingungsdämpfer (3'', 3''') durch einen Sprengring und der Vorsprung (13) innerhalb des Tragrohres (1'', 1''') durch in diesem ausgeprägte Innensicken gebildet sind.

4. Anordnung nach Anspruch 3, dadurch gekennzeichnet, daß am Boden des Schwingungsdämpfers (3'', 3''') ein Sechskant (16) oder dergleichen fest angebracht ist.

5. Anordnung nach Anspruch 3, dadurch gekennzeichnet, daß die oberen Befestigungseinrichtungen (4'') eine Klemmschraubanordnung (18) zum radialen Verklemmen des Außenrohrs (6'') im Tragrohr (1'') umfassen.

6. Anordnung nach Anspruch 3, dadurch gekennzeichnet, daß stirnseitig am Tragrohr (1'') zwischen Außenrohr (6'') und unterem Kragen des Federtellers (2'') ein Gummipuffer (19) angeordnet ist, welcher sich mit seinem oberen Ende stirnseitig gegen eine mit dem Außenrohr (6'') fest verbundene Scheibe (20) abstützt.

7. Anordnung nach Anspruch 3, dadurch gekennzeichnet, daß die oberen Befestigungseinrichtungen (4''') durch einen zwischen Außenrohr (6''') und Tragrohr (1''') einbringbaren geschlitzten, innenspannenden Ring (21) mit selbsthemmendem Außenkonus umfassen, welchem ein entsprechender Innenkonus des Tragrohrs (1''') zugeordnet ist, wobei sich der Ring (21) nach oben unter Zwischenschaltung einer axial beweglichen Scheibe (22) gegen eine vorgespannte Schraubenfeder (23) abstützt, die sich mit ihrem oberen Ende gegen eine mit dem Außenrohr (6''') fest verbundene Scheibe (24) abstützt.

8. Anordnung nach Anspruch 7, dadurch gekennzeichnet, daß zwischen dem innenspannenden Ring (21) und der axial beweglichen Scheibe (22) ein sich radial zwischen Außenrohr

(6‴) und Tragrohr (1‴) erstreckender Gummiring (25) oder dergleichen angeordnet ist.

9. Anordnung nach Anspruch 7 oder 8, dadurch gekennzeichnet, daß Außensicken unterhalb des innenspannenden Ringes (21) am Außenrohr (6‴) angeordnet sind.

**Claims**

1. Device for fixing a hydraulic vibration damper or the like in the axle tube (1′) of a wheel-carrying telescopic strut, in particular for motor vehicles, with upper attachment means (4′) provided in the region of the upper end portion of the damper (3′) between the latter and the axle tube (1′), a screwed ring being provided between the damper (3′) and the axle tube (1′), the upper attachment means (4′) being arranged in the region of the lower collar of the spring abutment plate (2′) secured on the axle tube (1′), and lower attachment means being provided in the region of the base of the damper (3′) between the latter and the axle tube (1′), characterised in that, the screwed ring (7) embodied in the upper attachment means (4′) is mounted rigidly on the outer tube (6′) of the damper (3′) and the lower attachment means (5′) are formed by abutment of the base of the damper (3′) against the base of the axle tube (1′), a hexagon (8) or the like being rigidly mounted on the base of the damper (3′), this hexagon projecting through a corresponding opening (9) in the base of the axle tube (1′) and the upper (4′) and lower (5′) attachment means being capable of actuation without subjecting the outer tube (6′) of the damper to any tension loading.

2. Device according to claim 1, characterised in that, a rubber ring (10) or the like is mounted in the screwed ring (7) and bears against the lower collar of the spring abutment plate (2′).

3. Device for fixing a hydraulic vibration damper or the like in the axle tube (1″, 1‴) of a wheel-carrying telescopic strut, in particular for motor vehicles, in which the downwardly open axle tube (1″, 1‴) has an upper and lower attachment for the damper (3″, 3‴) and the lower attachment means (5″, 5‴) have an annular projection (11) on which abuts an annular projection in the region of the end of the damper (3″, 3‴), and the end of the damper (3″, 3‴) has an extension provided with an external thread and abutting by means of a co-operating nut against the lower end of the axle tube (1″, 1‴), characterised in that, in the region of the upper end portion of the damper (3′, 3‴) between the latter and the axle tube (1″, 1‴) there is provided an upper attachment device (4″, 4‴), the upper attachment means (4″, 4‴) being arranged in the region of the lower collar of the spring abutment plate (2″, 2‴) secured on the axle tube (1″, 1‴), and that between the damper (3″, 3‴) and the axle tube (1″, 1‴) there is arranged a screwed ring (12), and that the annular projection (11) of the damper (3″, 3‴)

is mounted on a base cap (17) joined onto the outer tube (6″, 6‴) and the annular projection (11) on the damper (3″, 3‴) is formed by a spring ring and the projection (13) within the axle tube (1″, 1‴) by internal corrugations pressed out of the tube.

4. Device according to claim 3, characterised in that, a hexagon (16) or the like is rigidly mounted on the base of the damper (3″, 3‴).

5. Device according to claim 3, characterised in that, the upper attachment means (4″) include a clamping screw arrangement (18) for radially clamping the outer tube (6″) in the axle tube (1″).

6. Device according to claim 3, characterised in that, a rubber buffer (19) is arranged on the end of the axle tube (1″) between the outer tube (6″) and the lower collar of the spring abutment plate (2″), this buffer abutting with its upper end face against a ring (20) rigidly connected to the outer tube (6″).

7. Device according to claim 3, characterised in that, the upper attachment means (4‴) comprise a slotted inwardly stressed ring (21) mounted between the outer tube (6‴) and the axle tube (1‴) with a self-jamming external conical surface, with which is associated a corresponding internal conical surface of the axle tube (1‴), the upper face of the ring (21) being engaged by a pre-stressed helical spring (23) with the interposition of an axially floating ring (22), the upper end of this spring abutting against a ring (24) rigidly connected to the outer tube (6‴).

8. Device according to claim 7, characterised in that, a rubber ring (25) or the like extending radially between the outer tube (6‴) and the axle tube (1‴) is arranged between the inwardly stressed ring (21) and the floating ring (22).

9. Device according to claim 7 or 8, characterised in that, external corrugations are arranged on the outer tube (6‴) below the inwardly stressed ring (21).

**Revendications**

1. Dispositif de fixation d'un amortisseur hydraulique ou analogue dans le tube support (1′) d'une jambe élastique support de roue, en particulier pour véhicules motorisés, comportant un dispositif supérieur de fixation (4′) prévu au voisinage du tronçon supérieur d'extrémité de l'amortisseur (3′) entre celui-ci et le tube support (1′), une bague filetée disposée entre l'amortisseur (3′) et le tube support (1′) étant prévue, les dispositifs supérieurs de fixation (4′) étant disposés au voisinage du collet inférieur de la cuvette de ressort (2′) fixée sur le tube support (1′) et des dispositifs inférieurs de fixation étant prévus au voisinage du fond de l'amortisseur (3′) entre celui-ci et le tube support (1′), caractérisé en ce que la bague filetée (7), qui fait partie des dispositifs supérieurs de fixation (4′) est rigidement rapportée sur le tube extérieur (6′) de l'amortisseur (3') ; et en ce que les dispositifs inférieurs de fixation (5') sont constitués de l'appui du fond de l'amortisseur (3') contre le fond du tube support (1'), un six-pans (8) ou analogue étant rigidement rapporté sur le fond de l'amortisseur (3') et faisant saillie en dehors du fond du tube support (1') à travers une découpe correspondante (9) de ce tube support, les dispositifs supérieurs (4') et inférieurs (5') de fixation étant manœuvrables sans qu'il faille exercer une contrainte axiale de traction sur le tube extérieur (6') de l'amortisseur.

2. Dispositif selon la revendication 1, caractérisé en ce que dans la bague filetée (7) est logée une bague caoutchouc (10) ou analogue qui s'appuie contre le collet inférieur de la cuvette de ressort (2').

3. Dispositif de fixation d'un amortisseur hydraulique ou analogue dans le tube support (1'', 1''') d'une jambe élastique support de roue, en particulier pour véhicules, où le tube support (1'', 1'''), ouvert vers le bas, présente une fixation supérieure et une fixation inférieure pour l'amortisseur (3'', 3''') et où le dispositif inférieur de fixation (5'', 5''') présente une saillie de forme annulaire. (11) sur laquelle s'appuie une saillie de forme annulaire au voisinage de l'extrémité de l'amortisseur (3'', 3''') et où l'extrémité de l'amortisseur (3'' , 3''') présente un embout muni d'un filetage extérieur qui s'appuie avec un écrou collaborant, contre l'extrémité inférieure du tube support (1'', 1'''), caractérisé en ce qu'au voisinage de la portion supérieure d'extrémité (3'', 3'''), entre cette portion et le tube support (1'', 1'''), est prévu un dispositif supérieur de fixation (4'', 4'''), où les dispositifs supérieurs de fixation (4'', 4''') sont disposés au voisinage du collet inférieur de la cuvette de ressort (2'', 2''') fixée au tube support (1'', 1''') ; et en ce qu'entre l'amortisseur (3'', 3''') et le tube support (1'', 1''') est disposée une bague filetée (12) ; en ce que la saillie (11) de forme annulaire de l'amortisseur (3'', 3''') est rapportée sur un boisseau de fond (17) qui se raccorde au tube extérieur (6'', 6''') ; et en ce que la saillie (11) de forme annulaire de l'amortisseur (3'', 3''') est formée d'un circlips et la saillie (13) à l'intérieur du tube support (1'', 1''') est formée d'un soyage intérieur marqué dans ce tube.

4. Dispositif selon la revendication 3, caractérisé en ce que sur le fond de l'amortisseur (3'', 3''') est rapporté rigidement un six-pans (16) ou analogue.

5. Dispositif selon la revendication 3, caractérisé en ce que les dispositifs supérieurs de fixation (4'') comprennent un dispositif de vis-pointeau (18) pour brider radialement le tube extérieur (6'') entre dans le tube support (1'').

6. Dispositif selon la revendication 3, caractérisé en ce qu'un matelas de caoutchouc (19) est disposé frontalement contre le tube support (1''), entre le tube extérieur (6'') et le collet inférieur de la cuvette de ressort (2''), matelas qui s'appuie frontalement par son extrémité supérieure, contre une rondelle (20) solidarisée avec le tube extérieur (6'').

7. Dispositif selon la revendication 3, caractérisé en ce que les dispositifs supérieurs de fixation (4''') comprennent une bague (21) fendue à serrage interne, rapportable sur le tube support (1'''), à cône externe auto-bloquant, auquel correspond un cône interne correspondant du tube support (1'''), la bague (21) s'appuyant vers le haut, avec interposition d'une rondelle (22) mobile axialement, contre un ressort hélicoïdal (23) précontraint qui s'appuie par son extrémité supérieure contre une rondelle (24) solidarisée avec le tube extérieur (6''').

8. Dispositif selon la revendication 7, caractérisé en ce qu'entre la bague (21) à serrage interne et la rondelle (22) mobile axialement est disposée une bague caoutchouc (25) qui s'étend radialement entre le tube extérieur (6''') et le tube support (1''').

9. Dispositif selon la revendication 7 ou la revendication 8, caractérisé en ce que des soyages extérieurs sont disposés à l'intérieur de la bague à serrage interne (21) sur le tube extérieur (6''').

0 023 967

Fig. 1

Fig. 2

0 023 967

Fig. 3